Europäisches Patentamt

European Patent Office

Office européen des brevets

(11) Publication number: **0 187 163**
**B1**

(12) **EUROPEAN PATENT SPECIFICATION**

(45) Date of publication of patent specification: 28.03.90

(51) Int. Cl.⁵: **H 01 G 9/00, G 02 F 1/17,**
**H 01 M 4/96, H 01 M 4/02**

(21) Application number: 85902107.3

(22) Date of filing: 10.04.85

(86) International application number:
PCT/JP85/00182

(87) International publication number:
WO 86/00750 30.01.86 Gazette 86/03

(54) Polarizable electrode body, a method for its making and an electric double-layer capacitor comprising the polarizable electrode body.

(30) Priority: 17.07.84 JP 147811/84
27.07.84 JP 155149/84
30.07.84 JP 157271/84
06.09.84 JP 186715/84

(43) Date of publication of application:
16.07.86 Bulletin 86/29

(45) Publication of the grant of the patent:
28.03.90 Bulletin 90/13

(84) Designated Contracting States:
DE FR GB

(56) References cited:
FR-A-2 190 728      JP-A-52 116 835
JP-A- 593 913       JP-A-54 641 05
JP-A- 594 114       JP-A-56 134 299
JP-A-5 525 916      JP-A-58 206 116
JP-A-5 525 916      US-A-4 352 768
JP-A-5 666 854

PATENT ABSTRACTS OF JAPAN, vol. 8, no. 81
(E-238)1518r, 13th April 1984; & JP-A-59 3868
(PENTEL K.K.) 10-01-1984

(73) Proprietor: Matsushita Electric Industrial Co.,
Ltd.
1006, Oaza Kadoma
Kadoma-shi Osaka-fu, 571 (JP)

(72) Inventor: NISHINO, Atsushi
19-9, Nansuien-cho Neyagawa-shi
Osaka-fu 572 (JP)
Inventor: TANAHASHI, Ichiro Syato Sanfurawa
15-1, Shinbashi
Kadoma-shi Osaka-fu 571 (JP)
Inventor: YOSHIDA, Akihiko 2-4-410,
Taishibashi 3-chome
Asahi-ku, Osaka-shi
Osaka-fu 531 (JP)
Inventor: TAKEUCHI, Yasuhiro 18-6,
Machikuzuha 2-chome
Hirakata-shi
Osaka-fu 573 (JP)

(74) Representative: Jung, Elisabeth, Dr. et al
Dr. Elisabeth Jung Dr. Jürgen Schirdewahn
Dipl.-Ing. Claus Gernhardt Patentanwälte
Clemensstrasse 30 Postfach 40 14 68
D-8000 München 40 (DE)

**Description**

Technical field

The present invention relates to sheet-type polarizable electrode body constituted by activated carbon fiber and a fibrous binding medium, to a method for making the polarizable electrode body, and further to an electric double-layer capacitor comprising the polarizable electrode.

Background art

There is known a polarizable electrode material prepared by adding electrically conductive substances, such as graphite, carbon black or the like, and a binder such as polytetrafluoroethylene to activated carbon powder and compounding it to a paste-like mixture which is then pressed onto a collector material such as punched metal foil.

In that known embodiment the bonding force between the metal collector and the polarizable electrode is, however, weak and the activated carbon powder drops off from the collector or peels off therefrom or the bonding force between both members becomes weak during actual use due to stress caused by winding it up to form a capacitor and as a result, internal resistance of the electric double-layer capacitor gradually increases, whereas the collecting characteristics decrease. Furthermore, when the polarizable electrode body consisting of the activated carbon powder and the binder is press-rolled onto the collector, its application efficiency is poor and there is a problem of divergence of capacity due to non-uniform application of the polarizable electrode body. Moreover, when the activated carbon powder is used, foring of the electrode into a flat plate coin-type structure is difficult. More precisely, for manufacturing of the polarizable electrode body, a press-forming technique cannot be used unless the activated carbon powder has been preliminarily mixed with the electrolyte to form a paste. In case an organic electrolyte is used, its very small water content still will adversely influence the capacity characteristics and, therefore, the polarizable electrode body must be sufficiently dried to remove the water present.

From EP—0 112 928—A1 it is known to utilize in electric double-layer capacitors a fabric or cloth made from activated carbon fibers as the polarizable electrode which can be easily adapted to form a small coin-type capacitor having a large capacity. The cloth or felt-like fabric is self-supporting.

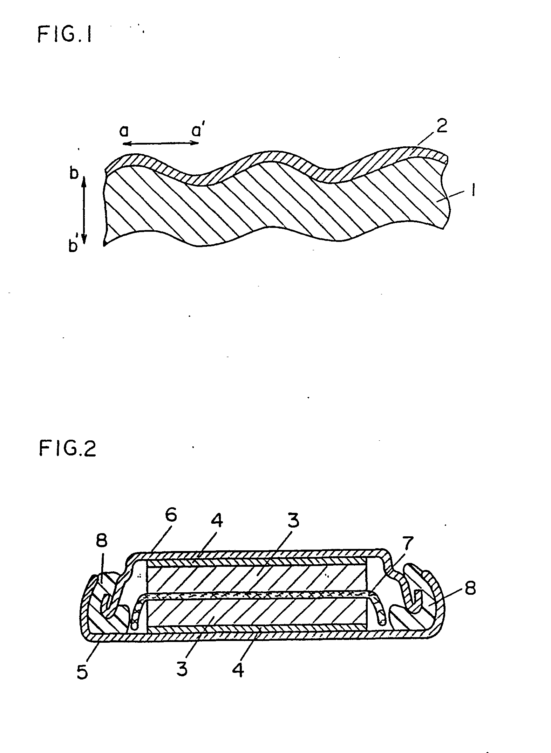

However, in the polarizable electrode body wherein a metal electrode layer 2 such as aluminum is formed on the activated carbon fiber texture 1 as shown in Figure 1, although the conductivity in an a—a′ direction in the drawing near the electrode layer is very good, the conductivity in the b—b′ direction is poor. Accordingly, it is necessary that a high pressure is applied during the sealing of the casing, so as to obtain sufficient physical contact among the fibers in the b—b′ direction, to maintain the internal resistance at a low value.

Furthermore, even when an activated carbon fiber of a phenol-type is used for preparing the cloth- or felt-like fabric and the specific surface area reaches a value above 2300 $m^2/g$ (BET method), then the mechanical strength is very much lowered and forming of the collector or the like while retaining the original configuration becomes very difficult in practice. Therefore, the selection of the material used for the active carbon fibers is limited in view of strength considerations.

In the electric double-layer capacitors of EP 0 112 923—A1 the polarizable electrode body prepared from a woven cloth or felt-like fabric has a layer of an electrically conductive substance provided on a surface thereof and a separator is disposed between said polarizable electrode and a counter-electrode.

It is, however, difficult to improve the electric conductivity of said polarizable electrode body by incorporating into the cloth or felt-like fabric another electrically conductive material. Additionally, the density in the direction of the thickness of the electrode cannot be easily changed in practice.

From JP—A—55-25916 there is known an electrical cell comprising an air electrode, an electromotive reaction being initiated by the influence of oxygen in the air as reactant. The electrode body is made from a mixture of active carbon fibers and electrolyte-resisting fibers, such as pulp or nylon fibers and processed to form a paper-like material.

The principles of the mechanism of such electrical cell are, however, quite different from those of a double-layer capacitor using a polarizable electrode.

Whereas an air electrode can only be made effective enough by incorporating a catalyst, i.e. a chelate compound, into the electrode structure, a polarizable electrode will not be improved in its functions by such catalyst substances.

Furthermore, it has to be pointed out that any air electrode of the type described in the above-mentioned publication deteriorates if the electrolyte infiltrates into its structure, which is contrary to the behaviour of a double-layer capacitor with a polarizable electrode, since satisfying characteristics cannot be attained in such a capacitor, unless the electrolyte infiltrates the electrode structure.

Disclosure of the invention

The present invention relates to an improved polarizable electrode body made of a mixture of activated carbon fibers and a fibrous binding medium by the paper making method, to a method of making such body and to an electric double-layer capacitor comprising said polarizable electrode, having a layer of an electrically conductive substance provided on a surface thereof, a counter electrode and a separator disposed between both types of electrodes, said electrodes and separators being immersed in an electrolytic solution. The polarizable electrode body has a particularly high density and small internal resistance, hence is easy in manufacturing.

It is an essential feature of the present invention that the binding medium used together with the activated carbon fibers is also present as a fibrous material so that the electrode body can be prepared by the paper making technique in a sheet form. The carbon fibers used have a fiber length within the range of from 1 to 5 mm.

By using this technique it is possible to improve the uniformity of the sheet-like electrode body and to incorporate substances which increase the electrical conductivity without impairing the mechanical strength of the electrode body.

Brief description of the drawing

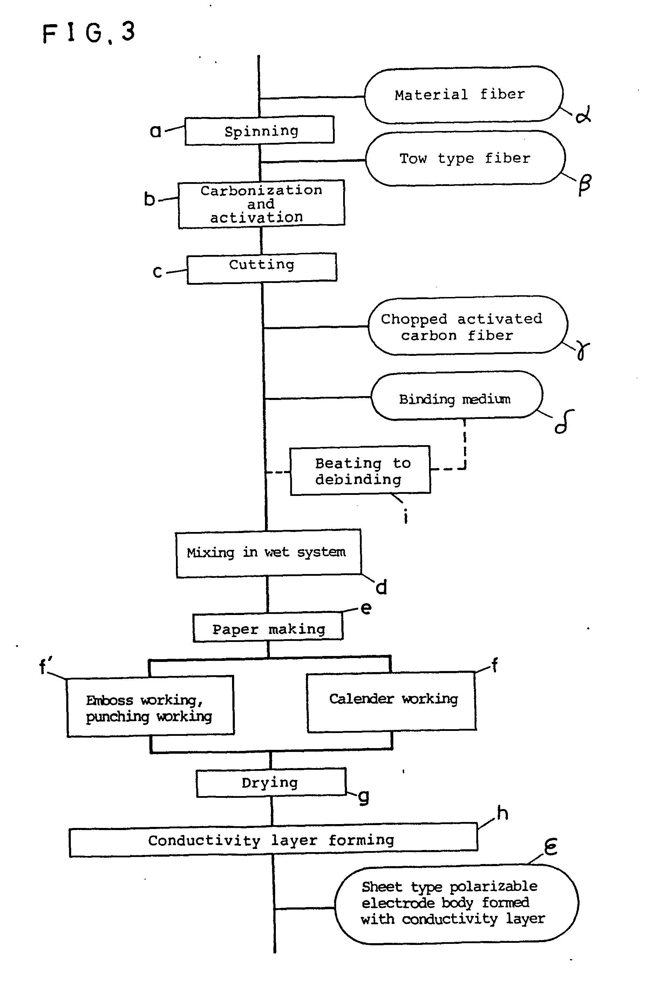

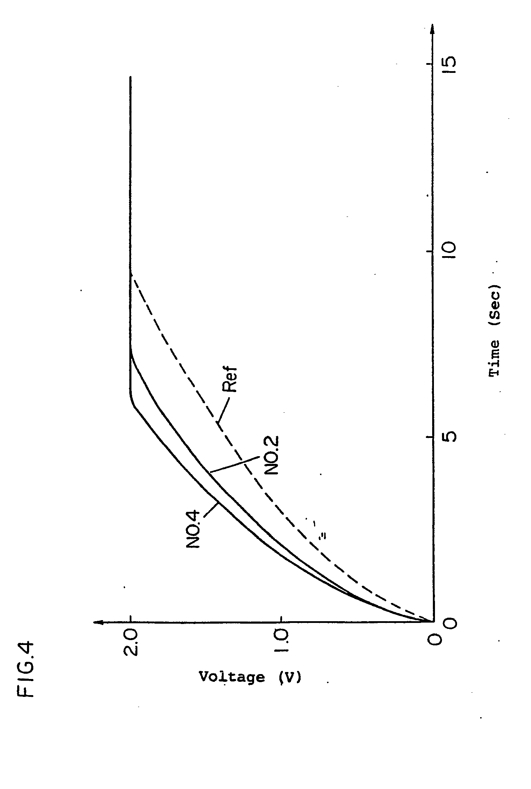

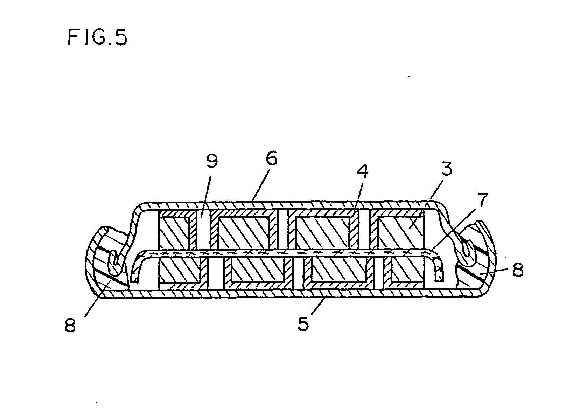

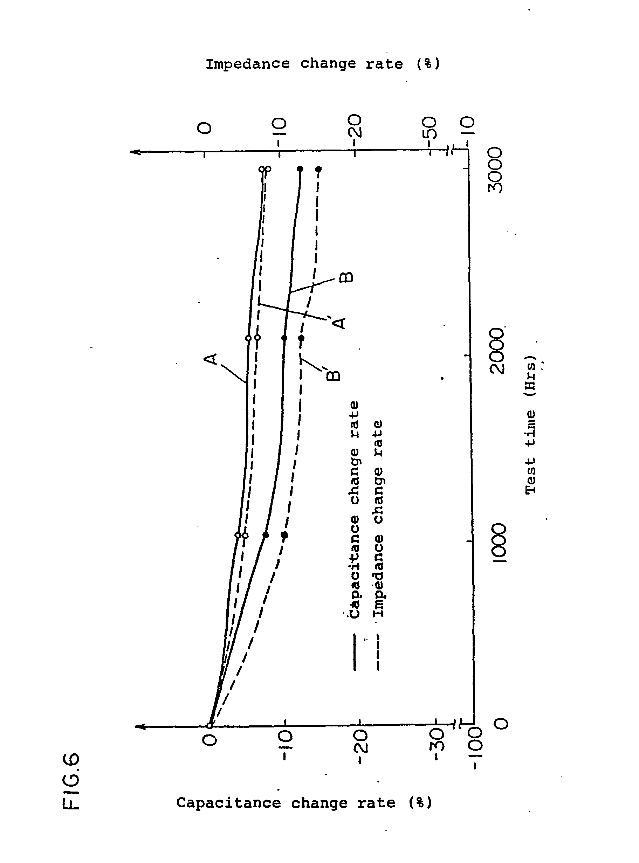

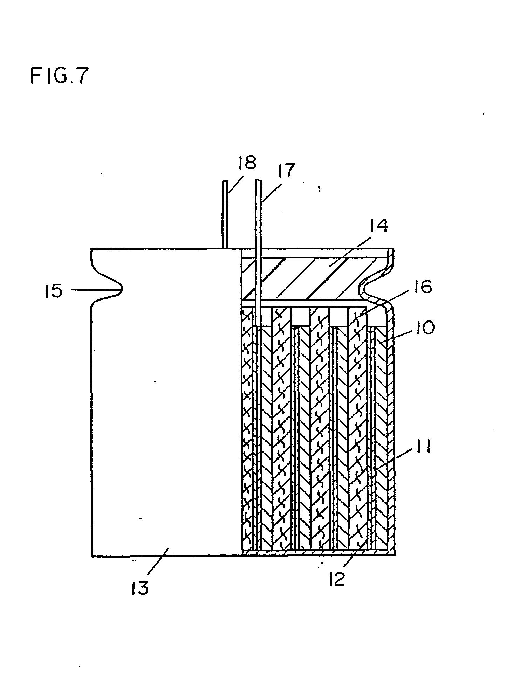

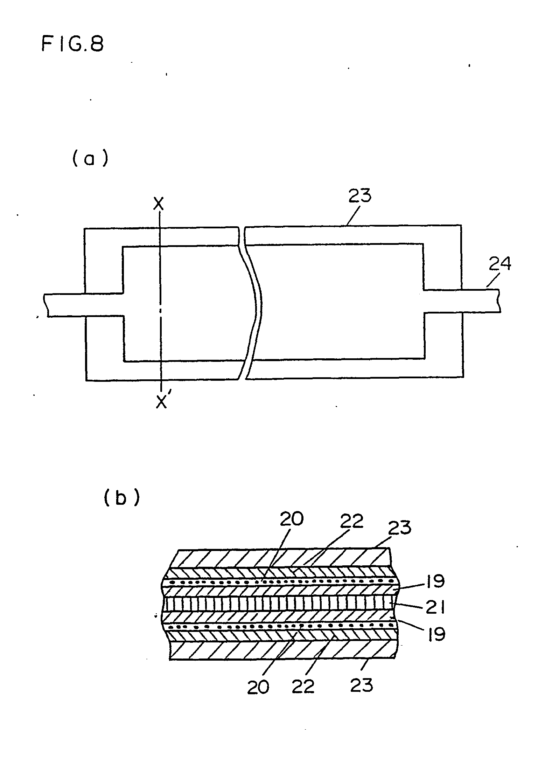

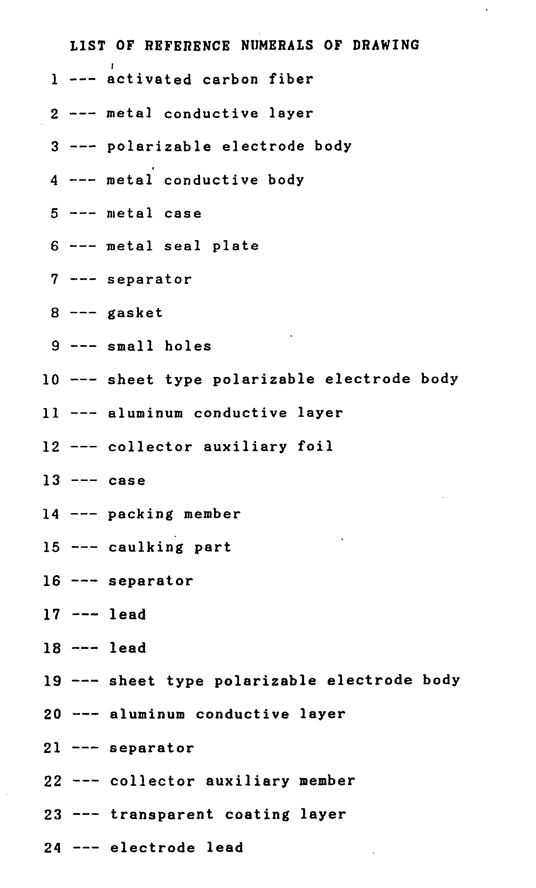

Figure 1 is a sectional view of the polarizable electrode body in accordance with the prior art; Figure 2 is a sectional configuration view of a capacitor of one embodiment of the present invention; Figure 3 is a manufacturing flow chart for producing a polarizable electrode body in accordance with the embodiment of the present invention; Figure 4 is a charging curve diagram of capacitors in accordance with the present invention and of a comparison example; Figure 5 is a sectional configuration view of a coin type capacitor according to an embodiment of the present invention; Figure 6 is an impedance change characteristic chart of a capacitor in accordance with an embodiment of the present invention and of a comparison example; Figure 7 is a partially sectionally configuration view of a wound type capacitor in accordance with an embodiment of the present invention; Figure 8a and b are a plan view and a sectional view of a sheet type capacitor according to an embodiment of the present invention, respectively.

The best mode for carrying out the invention

A polarizable electrode body of the present invention has the following characteristics in comparison with the conventional polarizable electrode of activated carbon fiber fabric:

(1) Though the activated carbon fiber fabric as described in EP—0 112 923—A1 is self-supporting, its strength is very much lowered when its specific surface area has a value above 2000 $m^2/g$; on the other hand, in case a polarizable electrode body of sheet type is made by the paper-making method using chopped type activated carbon fiber and a fibrous binding medium having a specific surface area of above 2000 $m^2/g$, the charged electricity per unit volume can be made to have a high value, since it has high strength, and besides, the specific surface area of the activated carbon fiber per se can be made to have a high value. Furthermore, a sheet type body can be made having a higher density.

(2) Using the activated carbon fiber fabric, the electric conductivity in laterial direction is good, but in the direction of thickness the electric conductivity becomes smaller than that in the lateral direction, since the continuous links of fiber are smaller; on the other hand, in the sheet type polarizable electrode body, by addition of another conductivity improving substance, the electric conductivities both in the direction of thickness and the lateral direction are improved, making the internal resistance small.

(3) In case of the activated carbon fiber fabric, it is very difficult to make a 100 µm thick or lower polarizable electrode body, while in the sheet type polarizable electrode body a 30 µm thickness can be easily achieved.

(4) In case of the activated carbon fiber cloth or fabric many steps are required to adjust the charges to be charged in the polarizable electrodes, whereas in case of the sheet type polarized electrode body, one having a desired charged electricity is obtainable by steps easily to be carried out.

An example of a constitution of a representative electric double-layer capacitor according to the present invention is shown in Figure 2. In Figure 2, 3 is a sheet-like shaped polarizable electrode body, having a conductive metal layer 4 on one surface thereof. Two such polarizable electrode bodies each provided with the above-mentioned conductive layer 4 are spot-welded respectively to a metal casing 5 and a metal seal plate 6, to obtain a stable electrode connection. The two sheet-like polarizable electrode bodies are arranged opposing one another with a separator 7 disposed inbetween. After filling an electrolytic solution therein by using a gasket 8 to prevent short-circuiting between positive and negative electrodes, a caulking for sealing is applied in order to make a coin type electric double-layer capacitor.

In the following a detailed explanation is given as regards characteristics and methods for making an electric double-layer capacitor of the present invention.

(1) Polarizable electrode body:

The polarizable electrode body fundamentally comprises activated carbon fibers and a fibrous binding medium, such as pulp. Additionally, another conductivity improvement substance such as carbon fiber may be added to the above-mentioned components. Generally, suitable activated carbon fibers are those of the phenol-type, rayon-type polyacrylonitrile (PAN)-type and pitch-type, depending on what starting materials are used for producing them. Among these, especially the phenol-type carbon fibers are outstanding in strength, carbonization activation yield and electric characteristics. According to a preferred embodiment tow-type phenolic resin fibers of 10—14 µm diameter are carbonized and activated by steam below 1000°C in an atmosphere of nitrogen to produce tow-type activated carbon fibers of about 10 µm diameter and a specific surface area of 2300 $m^2/g$ (BET method), they are cut into 1—5 mm length. In case an organic electrolytic solution is used as the electrolytic solution, the ion radius of the electrolyte is larger

3

than that of a water soluble one. When the pore diameter of the activated carbon fiber is below 20 Å an effective forming of an electric double layer at an interface between the electrolytic substance and the activated carbon fiber becomes impossible. Therefore the activated carbon fiber used in the present invention preferably has a high specific surface of 500—3000 $m^2$/g, a pore diameter distribution of 20—40 Å, and a pore volume of from 0.2—1.5 $cm^2$/g. More preferably the specific area is in the range of from 1500—3000 $m^2$/g, the pore volume of pores distributing in the pore diameter range of from 20—40 Å is 0.6—1.5 $cm^3$/g; and the rate of pores which distribute in the 20—40 Å diameter range to the internal surface area is above 40%. Under those conditions the immersion of the electrolyte into the pores becomes easy, and the area of double layer formation increases. The activated carbon fiber having such characteristic properties does not show a decrease of the area of double layer formation even when the viscosity of the electrolyte increases at low temperature.

(2) Binding medium:
Suitable fibrous media for the polarizable electrode body used in this invention comprise natural fibers, such as Manila hemp or kraft pulp, or synthetic fibers, such as polypropylene, polyethylene or acrylic fibers. Fibers of 2—5 mm length are used, if necessary the fibrous material is mechanically treated as by beating for unbinding. The degree of unbinding is usually represented by the Canadian standard freeness value (CSF). In a preferred embodiment of the invention a pulp having a CSF value of 0—500 ml is used. Furthermore, asbestos or glass fiber may be added in order to improve the mechanical strength.

(3) Conductivity improving substance other than the activated carbon fiber:
The following additional substances may be used in order to improve the electric conductivity of the polarizable electrode body and at the same time to strengthen the electrode body.

① Carbon fiber.
The carbon fiber has a higher electric conductivity and a higher mechanical strength than the activated carbon fiber. Carbon fiber of the phenolic-type, the acrilonitrile (PAN)-type and the pitch-type are preferred for this purpose.

② Metal fiber.
Stainless steel or nickel metal fiber of 1—20 µm diameter forming chips with a 1—10 mm length are suitable.

③ Metal-coated carbon fiber and resin fiber.
Such fibers are made by non-electrolytic plating on carbon fiber or resin fiber so as to retain flexibility and further to raise electric conductivity.

④ Miscellaneous.
Graphite powder, graphite fiber, carbon powder, metal-coated resin powder, or the like.

(4) Electrically conductive layer:
The electrically conductive layer is formed on a surface of the polarizable electrode body by plasma spraying, arc spraying, non-electrolytic plating, vapor deposition, spraying, or the like. The polarizable electrode body may also be coated with a conductive paint. Furthermore, as an auxiliary collector, a metal foil, especially an etched aluminum foil or the like, is suitable. As the electrically conductive substance aluminum, nickel and stainless steel which are electro-chemically stable, is suitable.

In the following a method of making the polarizable electrode body is elucidated. Figure 3 shows a manufacturing flow chart for preparing a sheet-type polarizable electrode body of the present invention. A phenolic resin, a polyacrilonitrile (PAN) resin or rayon is used as material for fiber (α), and through the spinning step (a) tow-type fiber (β) is obtained.

The above-mentioned fiber is activated by water steam under an inert gas atmosphere such as nitrogen, to make the activated carbon (b). The activated carbon fiber obtained in the carbonization and activation step (b) is cut into 1—5 mm length suitable for paper-making. The cutting may be made in the air, but it is desirable to use water as medium in order to prevent undesirable forming of powder dust. For the cutting, a mixer or guillotine cutter is used in order not to produce fine powder. It is desirable that the thus produced activated carbon fiber has a ratio of fiber length to fiber diameter of 50—500. The chopped-type activated carbon fiber (γ) obtained in this way and the fibrous binding medium (δ) are mixed in a wet system (d). The binding medium which is added may be treated beforehand in the beating step (i). At this stage, a conductivity improving substance may be added. In order to improve the processing in the next paper-making step (3), a polyethylene oxide in an amount of about 0.1 weight % of the paper-making mass may be added as dispersing agent, a fatty acid amide in an amount of about 0.01 weight % may be added as defoaming agent, and furthermore an emulsifier consisting of a polyethylene ester and a dehydration accelerating agent in an amount of about 0.3 weight % are added, and they are mixed into the wet system (d) together with a suitable amount of water. After the paper-making step (e) and the subsequent drying step (g), the fibrous mixture enters the conductive layer forming step (h). It is desirable that during the drying emboss working and punching working or calendar working (f, f') is carried out. After passing through the above-mentioned steps, the sheet-type polarizable electrode body formed and applied with a conductive layer (ε) is completed.

As regards the composition ratio of the activated carbon fiber and the fibrous binding medium the following considerations are important: when the amount of the binding medium decreases a capacitor having a small impedance and high capacity density is obtainable, though the relative strength of the polarizable electrode body decreases. On the other hand, when the binding medium reaches a percentage of 70%, the resistance of the polarizable electrode body increases, thereby making a capacitor of high internal resistance which is undesirable. On the contrary, when the binding medium is used in a concentration of 10% or lower, mechanical strength of the polarizable electrode body decreases, thereby causing many cracks inside the polarizable electrode body so that it is easily damaged when forming the conductive layer by the plasma spraying method. Accordingly, it is preferable to use a mixture containing 30—90% of activated carbon fiber, and more preferably to use one containing 50—80% of the activated carbon fiber.

In order to raise the density of the sheet-type polarizable electrode body, it is possible to apply calendar working, thereby to increase the capacity per unit body and besides decrease the resistance of the electrode body and also decrease the internal resistance of the capacitor. If the applied calendar working is too intense, then the surface of the polarizable electrode body is liable to produce fine powder. The density of the polarizable electrode body can be increased to a degree of about 0.7 g/cm$^3$, but it is preferably in the range of 0.2—0.6 g/cm$^3$. By the calendar working, the possibility of contact between the activated carbon fibers in the polarizable electrode body increases, thereby increasing the path for passing current, and accordingly an effective taking out of the charged double-layer capacitance becomes possible; therefore, a capacitor having a small I.R drop even at strong discharging can be made. As the thickness of the polarizable electrode becomes greater, the current collecting ability becomes smaller correspondingly, therefore in the capacitor of the present invention a polarizable electrode body of a density as high as possible and of a small thickness (preferably 600 μm or lower) is suitable.

By applying emboss working or punching working on the sheet-type polarizable electrode body, not only the mechanical strength of the electrode body increases but also a conductive layer is formed on the inner walls of small holes besides on the surface when the conductive layer is formed on the electrode body. By that means the current collecting ability in the direction of thickness very much improves, and besides, swelling of the polarizable electrode body by the electrolyte can be prevented, any increase of the internal resistance after long service time can be greatly lowered. The small holes may have diameters in the range of 0.5—3 mm, but those having a diameter of about 1.0 mm and a 1.5 mm pitch are very effective and those which are penetrating through the electrode sheet are more effective.

Next, detailed examples are described.

[Example 1]

By mixing chopped-type phenol-type activated carbon fiber (10 μmφ, 1—5 mm length) which has a specific surface area of 2300 m$^2$/g (BET method), a pore volume of 1.1 cm$^3$/g and a contribution of 40% or more is made by the pore volume of pores of 20—40 Å to the whole pore volume, with a binding medium comprising a mixture of Manila hemp (CSF value 460 ml) and kraft pulp (CSF value 0 ml), a polyethylenoxide (dispersant) in an amount of 0.1 weight % of the paper making mass, a fatty acid amide (defoamant) in an amount of 0.01 weight %, an emulsifier comprising an ester of polyethylene in an amount of 0.3 wt% and a dehydration accelerating agent with an appropriate amount of water; and by carrying out the ordinary paper-making method, sheet-type polarizable electrode bodies of the components, which are shown in Table 1 as weight ratio of activated carbon fiber and binder medium, are obtained. All polarizable electrode bodies shown in Table 1 have a thickness of 100 μm and their weights are 40 g/m$^2$. About 80 μm thick conductive aluminum layers are formed on one side of the polarizable electrode bodies by using the plasma spraying method. By using two sheet-type polarizable electrode bodies having this conductive layer, a coin-type electric double-layer capacitor is made. In the capacitors of this embodiment there are used mixed-paper matter of Manila hemp and glass fiber as the separator 7, stainless steel (SUS 444 or SHOMAC (brand name of Showa Denko Kabushiki Kaisha of Japan)) as positive electrode side sealing plate 6 and stainless steel (SUS 304) as the negative side case 5. The surface of the polarizable electrode body having the conductive layer is disposed to contact the sealing plate and the case. In order to ensure the positioning of the polarizable electrode body and the electric connection in a certain manner, spot welding is applied. After arranging the polarizable electrode bodies 3 to oppose each other with the separator 7 disposed inbetween, propylenecarbonate solution containing 1 mol tetraethylammonium perchlorate is filled in and the positive and negative electrodes are insulated by a gasket 8, and sealing of the case by caulking is carried out. The polarizable electrode body of this embodiment has a circular shape with a diameter of 14 mm. The separator has a 60 μm thickness and is of the same circular shape, but of 17 mm diameter, and 150 μl of the electrolyte is used for immersing the electrodes and the separator. The size of the coin-type electric double-layer capacitor after sealing of the casing is 20 mm in diameter and 1.6 mm in height. In Table 1, the electrode body compositions, their relative strengths as well as capacitances and impedance values (measured at 1 kHz) of the capacitors are shown. Comparison Sample No. 8 shown in Table 1 is made of an activated carbon fiber cloth matter, and it was impossible to make such a thin electrode body of 40 g/m² as in the present embodiment. When the same organic electrolyte is used as in the present embodiment, the breakdown voltage of the capacitor becomes 2.0—2.4 V.

TABLE 1

| Sample No. | Weight ration in mixture of activated carbon fiber and binding medium | | Relative strength of polarizable electrode body | Capacitance (F) | Impedance (Ω) [at 1 kHz] |
|---|---|---|---|---|---|
| | Activated carbon fiber | Binding medium | | | |
| 1 | 30 | 70 | Large | 0.12 | 58.2 |
| 2 | 40 | 60 | Large | 0.16 | 40.1 |
| 3 | 50 | 50 | Large | 0.19 | 32.4 |
| 4 | 60 | 40 | Large | 0.22 | 18.2 |
| 5 | 70 | 30 | Middle | 0.28 | 10.6 |
| 6 | 80 | 20 | Middle | 0.31 | 5.9 |
| 7 | 90 | 10 | Small | 0.36 | 4.8 |
| 8 (comparison) | 100 | 0 | — | — | — |

[Example 2]

A sheet-type polarizable electrode body with a weight ratio of the activated carbon fiber and binding medium of 80:20 (see Sample No. 6 of Table 1 of the Example 1) is calendar-worked during manufacturing to increase the density of the electrode body, and is used for making a coin-type capacitor of the same size and type as in Example 1. Table 2 shows characteristics of the respective polarizable electrode bodies and the various characteristics of the capacitors made by using them. In every polarizable electrode body the weight per unit area is 120 g/m². In the sequence of Samples No. 1 to No. 4, the impedance value of the capacitors becomes lower and strong discharging becomes easy, thereby improving the capacitor characteristics.

TABLE 2

| Sample No. | Characteristics of polarizable electrode body | | Characteristics of capacitor | | |
|---|---|---|---|---|---|
| | Thickness (μm) | Density (g/cm³) | Capacitance (F), | Impedance (Ω) | Strong discharging ability |
| 1 | 590 | 0.20 | 0.92 | 5.3 | Good ↓ |
| 2 | 455 | 0.26 | 0.93 | 5.1 | |
| 3 | 305 | 0.39 | 0.93 | 4.4 | |
| 4 | 210 | 0.57 | 0.93 | 4.2 | ▼ |

[Example 3]

On one side of a polarizable electrode body similar to that described in Example 1, a conductive paint, which contains conductive carbon granules and a butyl-type resin as binding medium, is applied as a layer with a thickness of about 50 μm by using the screen printing method, and dried at 120°C. When a coin-type capacitor is made under the same conditions as regards electrolyte, casing, etc., as described in Example 1 about the same capacitor value as that of Example 1 is obtained, while, however, the impedances of the present embodiment show 30—50% larger values in comparison with that of Example 1. This improvement is due to the fact that the metal conductive layer has a strong bonding to the polarizable electrode body and that the resistance values of the conductive layer per se are different.

[Example 4]

By using chopped-type phenol-type activated carbon fiber (ACF) (having a specific surface area of 1800 $m^2$/g by BET method and a pore volume of 0.7 $cm^3$/g) and synthetic polypropylene resin pulp as binding medium, a sheet-type polarizable electrode body having a weight ratio of ACF/binding medium of 70/30, a thickness of 270 μm and a weight per unit area of 60 $g/m^2$, is formed by using the conventional paper making method. On this electrode body a conductive layer of nickel metal having a thickness of 150 μm is formed on one surface of the electrode body by a plasma spraying method. By using a non-woven fabric of polypropylene as separator and 24 wt% potassium hydroxide as electrolytic solution, a coin-type capacitor of the similar type as that of Examples 1—3 is made. When an aqueous electrolyte is used as in this Example, though its breakdown voltage can not be made greater than 1.23 V which is the theoretical decomposition voltage of water, the conductivity becomes higher by two figures in comparison with the non-aqueous types. Therefore a capacitor which is outstanding as regards strong discharging characteristics can be made. Since the sizes of anions and cations are smaller than the ions of the perchloric acid (see Example 1), the ions can easily enter into the inside of the fine pores of the activated carbon fiber, and thereby the effective double layer forming area increases. Though the mechanical strength of the polarizable electrodes which uses synthetic polypropylene resin pulp as the binding medium is stronger than that using the natural pulp, the resistance value of the electrode body per se increases.

TABLE 3

| Weight ratio of mixture of activated carbon fiber and binding medium | | Capaci-tance (F) | Impedance (Ω) [at 1 kHz] | Break-down voltage (V) |
|---|---|---|---|---|
| Activated carbon fiber | Binding medium | | | |
| 70 | 30 | 1.6 | 2.0 | 1.2 |

[Example 5]

During a long storage period the natural pulp swells up to some extent by the electrolytic solution, and the gap between the activated carbon fibers expands, accordingly the internal resistance increases and taking out of the capacitance becomes difficult. When instead of the natural pulp (mixture of Manila hemp and kraft pulp) only a synthetic pulp (made of polypropylene) is used, the synthetic pulp has a high resistance when a non aqueous type solvent is used as the electrolyte, therefore satisfactory capacitance characteristics cannot be realized. Accordingly in the present example, the natural pulp and the synthetic pulp are mixed as shown in Table 4, and a weight ratio of the activated carbon fiber and the binding medium of 70/30 is used for the paper making process, thereby the strength of the polarizable electrode body is increased. On the surface of Samples No. 1—5 of Table 4 a conductive layer of aluminum is formed similarly to Example 1, and the coin-type capacitors are made with an electrolytic solution of similar type. A reliability acceleration test is carried out by applying 2.0 V constantly at 70°C on the capacitors, and the respective capacity change rate after 1000 hrs. is shown in Table 4. Electrode bodies which comprise a mixture of synthetic pulp and natural pulp show after beating and debinding a little increased strength and improved reliability. The Sample No. 5 which does not use any natural pulp has a large resistance of the polarizable electrode body and the capacity change rate is large, too.

7

TABLE 4

| Sample No. | Weight composition of polarizable electrode body | | | Characteristics of capacitor | |
|---|---|---|---|---|---|
| | Activated carbon fiber | Natural pulps (mixture of manila hemp and kraft pulp) | Synthetic pulp | Capacitance (F) | Reliability test capacitance change rate (%) after 1000 hrs. |
| 1 | 70 | 30 | 0 | 0.28 | −7.3 |
| 2 | 70 | 25 | 5 (polypropylene) | 0.28 | −7.1 |
| 3 | 70 | 20 | 10 (polypropylene) | 0.28 | −7.1 |
| 4 | 70 | 20 | 10 (polypropylene) | 0.28 | −7.2 |
| 5 | 70 | 0 | 30 (polypropylene) | 0.28 | −11.3 |

[Example 6]

In order to increase the electric conductivity of the sheet-type polarizable electrode body and to take out the charge stored on the surface of the activated carbon fiber with good efficiency, various kinds of carbon fibers are used for preparing the activated carbon fibers in the compositions set forth in the Examples 1—5.

In Table 5, various characteristics of the various kinds of carbon fibers are shown. In Table 6 the characteristics of the activated carbon fibers are shown. For the paper making step the phenol-type carbon fiber of Sample No. 1 in Table 5 is most suitable. Though there exists carbon fiber of the rayon type besides those shown in Table 5, this type has no good properties as regards carbonization yield and mechanical strength. The PAN-type fiber of Sample No. 2 has a high elasticity but a poor workability in the paper making step and when a capacitor is made with such a polarizable electrode body, the carbon fiber becomes nappy and the possibility of short circuiting by penetration through the separator is higher in comparison with Sample No. 1. The pitch-type fiber of Sample No. 3 does not have enough flexibility and gives a similar effect as that of Sample No. 2 when disposed into the capacitor.

Various coin-type capacitors similar to those of Example 1 are made by using polarizable electrode bodies having various compositions and their characteristics are shown in Table 7. Details of the capacitors of the present example are listed as follows:

Electrolytic solution—propylenecarbonate (PC) solution containing 1 mol $(C_2H_5)_4NBF_4$, 150 µl.

Separator—70 µm thick non-woven fabric of polypropylene, of circular type, 17 mmφ

Polarizable electrode body—350 µm thick, weight per unit area: 120 g/m² composition is as in Table 7, circular type 14 mmφ

Conductive layer—150 µm thick aluminum layer formed by plasma spraying.

9

TABLE 5

| Sample No. | Kinds of carbon fiber | Carbon content (wt%) | Specific resistivity ($\times 10^{-5}$ $\Omega \cdot cm$) | Tensile strength (kg/mm²) | Modulus of elasticity (kg/mm²) |
|---|---|---|---|---|---|
| 1 | Phenol-type | 94.0 | 1,000—3,000 | 65 | 3,500 |
| 2 | Polyacrilnitril-type | 92.6 | 800—1,000 | 150 | 14,500 |
| 3 | Coal tar pitch-type | 95.3 | 2,000—3,000 | 60 | 3,500 |

TABLE 6

| Sample No. | Kinds of activated carbon fiber | Specific surface area (m²/g) | Pore volume (cm³/g) | Pore diameter distribution (Å) | Fiber strength (relative value) |
|---|---|---|---|---|---|
| 1 | Phenol-type | 2,300 | 1.2 | 20—40 | Strong |
| 2 | Rayon-type | 600 | 0.30 | 20—30 | Weak |
| 3 | Polyacrilnitril-type (Pan-type) | 700 | 0.36 | 20—80 | Weak |
| 4 | Coal tar pitch-type | 630 | 0.33 | 20—30 | Medium |

Table 7 shows the compositions of polarizable electrode bodies and their various characteristics when they are assembled in a coin-type capacitor. From the Table it is understood that, in general, low impedance and low internal resistance are obtainable by mixing any kinds of carbon fiber. Especially the phenol-type one are soft and flexible, hence easily disperse uniformly in the sheet-type polarizable electrode body, and outstanding ones are obtainable. In Table 7, PP designates polypropylene, PE polyethylene and pulp designates a mixture of Manila hemp and kraft pulp. Numeric values for the reliability acceleration tests show capacity change rates after a continued charging during 1000 hrs. of 2.0 V at 70°C under an inert atmosphere. Accordingly, the smaller the absolute value is, the higher is the reliability. In Table 6, various characteristics of 4 kinds of activated carbon fibers are shown. Since the electric double layer is formed at an interface between the activated carbon fiber and the electrolyte, the activated carbon fiber of the phenol-type is most suitable; and since pore diameters of 20—40 Å are necessary in order that tetraethylammonium ions ($(C_2H_5)_4N^+$) or borofluoride ions ($BF_4^-$) penetrate into the pores of the activated carbon fibers to effectively form the double layer, the phenol-type fiber is suitable also from this point of view. Sample No. 3 of the PAN-type fiber shown in Table 6 has a pore diameter distribution with a center in the larger diameter range, but it is very difficult to raise the specific surface area above 1000 $m^2/g$, furthermore the electric resistance is high and it cannot be said to be suitable for a polarizable electrode body of a capacitor.

Sample No. 16 is included for comparison purposes: the polarizable electrode body is made from a cloth of the respective activated carbon fiber without any fibrous binding medium.

TABLE 7

| Sample No. | Kind of polarizable electrode body and weight composition | | | Capacitance (F) | Impedance $(\Omega)$ [at 1kHz] | Reliability acceleration test |
|---|---|---|---|---|---|---|
| | Activated carbon fiber (%) | Carbon fiber (%) | Binding medium (%) | | | |
| 1 | Phenol-type 80 | Phenol-type 10 | Pulp 10 | 0.32 | 5.1 | −4.3 |
| 2 | Phenol-type 70 | Phenol-type 20 | Pulp 10 | 0.28 | 5.9 | −4.9 |
| 3 | Phenol-type 70 | Phenol-type 20 | PP 10, pulp 10 | 0.28 | 7.4 | −6.2 |
| 4 | Phenol-type 60 | Phenol-type 20 | Pulp 20 | 0.24 | 6.1 | −4.8 |
| 5 | Phenol-type 60 | Phenol-type 20 | PE 10, PET 10 | 0.24 | 7.8 | −6.3 |
| 6 | Phenol-type 60 | Phenol-type 20 | Pulp 20 | 0.24 | 5.2 | −5.3 |
| 7 | Phenol-type 50 | Phenol-type 30 | Pulp 20 | 0.20 | 4.3 | −4.1 |
| 8 | Phenol-type 40 | Phenol-type 40 | Pulp 20 | 0.16 | 4.2 | −4.0 |
| 9 | PAN-type 60 | Phenol-type 20 | Pulp 20 | 0.12 | 7.9 | −8.4 |
| 10 | PAN-type 60 | PAN-type 20 | Pulp 20 | 0.12 | 7.8 | −8.2 |
| 11 | PAN-type 60 | Rayon-type 20 | Pulp 20 | 0.12 | 7.9 | −8.3 |
| 12 | Rayon-type 60 | Phenol-type 20 | Pulp 20 | 0.11 | 8.1 | −9.9 |
| 13 | Rayon-type 60 | PAN-type 20 | Pulp 20 | 0.11 | 8.0 | −9.9 |
| 14 | Rayon-type 60 | Rayon-type 20 | Pulp 20 | 0.11 | 8.1 | −9.8 |
| 15 | Pitch-type 60 | Phenol-type 20 | Pulp 20 | 0.10 | 8.2 | −10.2 |
| 16*) | Phenol-type 100 | 0 | 0 | 0.40 | 6.0 | −9.8 |

*) for comparison only

EP 0 187 163 B1

EP 0 187 163 B1

From Table 7 it is clear that capacitors using the activated carbon fiber and carbon fiber of the phenol-type in the electrode bodies (see Samples No. 1—8) have good capacitor characteristics. Further it is obvious that as the amount of carbon fiber is increased, impedance decreases, the internal resistance also decreases, and the conductivity of the electrode body is improved and reliability is also improved. Furthermore, in comparison with the activated carbon fiber cloth of the Comparison Sample No. 16, the capacitor of the present example has better characteristics. Figure 4 shows charging curves of a capacitor wherein no carbon fiber as the fibrous binding medium and conductivity improving substance was used (Comparison Sample, curve "Ref") and of capacitors according to Samples Nos. 2 and 4 shown in Table 7. Since Samples Nos. 2 and 4 of Table 7 are having different capacity values, the weight of the respective electrodes has been regulated such that the capacitors had the identical capacity. It is obvious that the present examples have a shorter charging time.

[Example 7]

For the purpose of improving the conductivity of the polarizable electrode body, the following components ⓐ, ⓑ and ⓒ are used in the proportion as shown in Table 8 and Table 9, to form the polarizable electrode body: ⓐ is activated carbon fiber (length 2—3 mm, diameter 10 µm) having 50% or higher distribution of pore diameter of 20—40 Å which is obtained by carbonization and activation of phenol-type hardened novolak resin fiber, having a specific surface area of 2200 $m^2$/g (BET method), ⓑ is a binding medium such as natural pulp (mixture of Manila hemp and kraft pulp) or synthetic pulp (polyethylene or polypropylene fiber), ⓒ are graphite granules of high electric conductivity formed at 2000°C or above of carbon black or conductive granules which have been made by non-electrolytic nickel plating on fine powder phenol resin. Details as regards the components, weight ratios, binding medium and electrolytic solution and electrolyte are shown in Table 8 and Table 9.

13

TABLE 8

| No. | Polarizable electrode body | | Electrolytic solution | | Capacitance (F) | Impedance (Ω) [at 1 kHz] | Capacitance change rate (%) after 1000 hrs. charging of 2 V, at 70°C |
|---|---|---|---|---|---|---|---|
| | Amount of graphite powder (weight %) | Binding medium (weight %) | Electrolyte | Solvent | | | |
| 1 | 0 | Pulp 20 | $(C_2H_5)_4NClO_4$ | Propylenecarbonate | 0.63 | 6.8 | −21.5 |
| 2 | 0.5 | Pulp 19.5 | " | " | 0.64 | 6.0 | −18.0 |
| 3 | 1 | Pulp 19 | " | " | 0.64 | 5.1 | −14.0 |
| 4 | 5 | Pulp 15 | " | " | 0.63 | 4.3 | −13.0 |
| 5 | 10 | Pulp 10 | " | " | 0.64 | 3.2 | −11.3 |
| 6 | 20 | Pulp 10 | " | " | 0.57 | 2.6 | −10.3 |
| 7 | 10 | Polyethylene 15 | $(C_2H_5)_4NBF_4$ | " | 0.6 | 4.2 | −16.2 |
| 8 | 10 | Polyethylene 15 | $(C_2H_5)_4NPF_6$ | " | 0.6 | 4.1 | −15.9 |
| 9 | 10 | Polyethylene 15 | $LiClO_4$ | γ-buthyllactone | 0.6 | 4.3 | −16.0 |
| 10 | 10 | Polypropylene 15 | KOH | | 1.2 | 1.3 | −15.0 |
| 11 | 10 | Polypropylene 15 | $H_2SO_4$ | | 1.2 | 1.2 | −14.6 |
| 12 | 10 | Polypropylene 15 | NaOH | | 1.2 | 1.6 | −13.9 |

EP 0 187 163 B1

Table 8 shows the difference of capacitor characteristics depending on the amount of added graphite powder as conductivity improving substance and on electrolytic solution. The capacitors are coin-type ones having the similar shape as those of Example 1, the separator being a polypropylene non-woven fabric (17 mmφ and 60 μm), the thickness of the polarizable electrode being 450 μm, the electrode diameter being 14 mmφ, the weight per unit area being 80 g/m². As conductive layer aluminum is applied by plasma spraying for the organic electrolytic solution type capacitors and for the aqueous electrolytic solution type a nickel layer is applied by spraying. From Table 8 it can be seen that all of the Samples 1—12 show good capacitor characteristics, particularly when the amount of added graphite is at least 1% or more, preferably 5—10%, lowering of the impedance is observed and an effect of conductivity improvement is observed.

In the $(C_2H_5)NBF_4$/propylenecarbonate-type capacitors, the breakdown voltage is about 2.8 V, while in the aqueous types it is about 1.0 V. As the graphite amount increases, the electric characteristics gradually improve, but the electrode strength decreases, and therefore preferably an amount of about 10 weight % is used. In the reliability test (2 V application at 70°C) the change rate after 1000 hrs. from the initial capacitance becomes smaller as the graphite amount increases.

By using conductive granules which are made from ⓐ carbon black and ⓑ nickel-plating on fine powder phenol resin instead of graphite powder, similar coin-type capacitors are made with polarizable electrode bodies whose components are shown in Table 9, and their characteristics are measured. The content of activated carbon fiber amounts to 70 weight % of the whole.

TABLE 9

| Polarizable electrode body | | Electrolytic solution | | Capacitance (F) | Impedance ($\Omega$) [at 1 kHz] | Capacity change after 1000 hrs. of 2 V charging at 70°C |
|---|---|---|---|---|---|---|
| Conductivity improving agent (wt%) | Binding medium (wt%) | Electrolyte | Solvent | | | |
| ⓐ carbon black      10 | 20 | $(C_2H_5)_4NClO_4$ | Propylene carbonate | 0.56 | 3.1 | −13.3 |
| ⓑ conductive granules    10 | 20 | KOH | | 1.13 | 1.3 | −15.4 |

EP 0 187 163 B1

From Table 9 it is obvious that also with the above-mentioned conductivity improving substances a similar effect as with the graphite powder is obtainable.

[Example 8]

For preparing a polarizable electrode body the following components are mixed well in a weight ratio as shown in Table 10 and processed into a sheet form by a paper making step under conditions such that non-uniformity due to differences of specific gravity is avoided: ⓐ activated carbon fiber of Table 10, ⓑ as conductivity improving substance, chopped-type metal fiber (stainless steel, aluminum, nickel, etc.) of 1—20 μmφ and 1—10 mm length (produced from a cylinder by the so-called bibirivibration method) and ⓒ a binding medium consisting of natural pulps (mixture of Manila hemp and kraft pulp).

The characteristics of the activated carbon fibers used are those described in Table 6 of Example 6. On one surface of the sheet-type polarizable electrode body thus formed, an electrically conductive layer of aluminum of nickel is formed in a thickness of 100 μm by using the plasma spraying method. The capacitors made in the present example are of the coin-type of the same size as in Examples 1—7.

EP 0 187 163 B1

TABLE 10

| Sample No. | Polarizable electrode body | | | Conductive layer | Electrolytic solution | | Capacitance (F) | Impedance (Ω) [at 1 kHz] | Capacitance change rate (%) after 1000 hrs. charging of 2 V, at 70°C (%) |
|---|---|---|---|---|---|---|---|---|---|
| | Activated carbon fiber (wt%) | Metal short fiber (wt%) | Binding medium (wt%) | | Electrolyte | Solvent | | | |
| 1 | Phenol-type 70 | 0 | Natural pulp 30 | Aluminum | $(C_2H_5)_4NClO_4$ | Propylene carbonate | 0.28 | 10.6 | −7.3 |
| 2 | Phenol-type 70 | Stainless 5 | Natural pulp 25 | Aluminum | $(C_2H_5)_4NClO_4$ | Propylene carbonate | 0.285 | 8.3 | −6.8 |
| 3 | Phenol-type 70 | Stainless 10 | Natural pulp 20 | Aluminum | $(C_2H_5)_4NClO_4$ | Propylene carbonate | 0.284 | 8.0 | −6.7 |
| 4 | Phenol-type 60 | Stainless 20 | Natural pulp 20 | Aluminum | $(C_2H_5)_4NClO_4$ | Propylene carbonate | 0.24 | 7.6 | −6.3 |
| 5 | Phenol-type 40 | Stainless 30 | Natural pulp 30 | Aluminum | $(C_2H_5)_4NClO_4$ | Propylene carbonate | 0.15 | 6.5 | −6.0 |
| 6 | Phenol-type 60 | Stainless 20 | Natural pulp 20 | Aluminum | $(C_2H_5)_4BF_4$ | γ-buthyl-lactone | 0.25 | 7.8 | −6.0 |
| 7 | Phenol-type 60 | Nickel 20 | Propylene synthetic pulp 20 | Nickel | KOH | | 0.51 | 4.0 | −7.8 |
| 8 | PAN-type 60 | Stainless 20 | Natural pulp 20 | Aluminum | $(C_2H_5)_4NClO_4$ | Propylene carbonate | 0.12 | 7.9 | −10.6 |
| 9 | PAN-type 60 | Stainless 20 | Natural pulp 20 | Aluminum | $(C_2H_5)_4NClO_4$ | Propylene carbonate | 0.12 | 7.8 | −9.9 |
| 10 | Pitch-type 60 | Stainless 20 | Natural pulp 20 | Aluminum | $(C_2H_5)_4NClO_4$ | Propylene carbonate | 0.10 | 9.0 | −11.0 |

From Table 10 it can be seen that even when the metal short fiber is added, the conductivity is improved and the impedance is also lowered, whereas in the reliability test at 70°C and 2 V charging, a moderate improvement is observed.

[Example 9]

A sheet-type polarizable electrode body having as its principal component phenol-type activated carbon fibers (weight ratio of the activated carbon fiber and binding medium is 80:20 as in Sample No. 6 shown in Table 1 of Example 1) is calendar worked in order to raise its density to 0.5 g/cm$^3$ and to achieve a weight per unit area ratio of 120 g/m$^2$, additionally by punching working and through hole working, small holes of 1.0 mm diameter with 1.5 mm pitch are made in this polarizable electrode body. On one surface of the body a conductive aluminum metal layer is formed. Then an electric double-layer capacitor having incorporated the above electrode body as constitutive element as shown in Figure 5 is made. Incidentally the same elements as shown in Figure 2 are designated by the same numerals. 9 is a small hole and 3 is the sheet-type polarizable electrode body. In this embodiment the conductive metal layers 4 are spot welded to the metal seal plate 6 and the metal case 5 respectively, which is a sealing case, and they are arranged to oppose one another with a separator 7 of polypropylene disposed inbetween. As electrolytic solution, 1 mol propylenecarbonate solution containing 1 ml $(C_2H_5)_4NBF_4$ is used and the positive and negative electrodes are insulated by gasket 8, then sealing of the casing is completed. The polarizable electrode body of the present example has a size of 6 mm in diameter and after the sealing the casing has a size of 12.0 mm in diameter and 1.5 mm in thickness. The capacitance is 0.12 F. As comparison example a polarizable electrode body of the same components as in the present example but having no small holes is used for making a similar capacitor. Both are then subjected to the reliability test at 70°C by impressing 2 V. The result is shown in Figure 6. The ordinate shows the capacitance value and the abscissa shows the testing time. In the graph, A demonstrates the capacitance change of the present example and B that of the comparison example (having the same components as A but no holes). A' and B' of Figure 6 show the impedance changes of the present example and the comparison example respectively. In A', the impedance value is about half that of B', and from the graph it can be seen that the present example has a small change rate and very good capacitor characteristics. In this example, the plasma sprayed aluminum layer is only on one side of the electrode body and on the inner wall of the small holes, but even when the sprayed layer is formed on the inner walls of the small holes as well as on both surfaces, the characteristics are not much different from the present example.

[Example 10]

A phenol-type activated carbon fiber comprising mixture having the composition of Sample No. 6 shown in Table 1 (weight ratio of the activated carbon fiber and binding media is 80:20) is calendar worked to achieve a thickness of 260 μm and a weight per unit area of 120 g/cm$^2$. With this sheet-type electrode body a wound-type capacitor of the constitution shown in Figure 7 is made. The conductive layer is formed by spraying aluminum to a thickness of about 100 μm. In the drawing, 10 is a sheet-type polarizable electrode body, 11 is a conductive aluminum layer, 12 is a collector auxiliary foil. The following two kinds of materials are examined: (1) etched aluminum foil of 30 μm and (2) aluminum foil of 30 μm thickness. 13 is an aluminum casing, 14 is gum packing member, and after filling in propylene-carbonate electrolytic solution containing 1 mol $(C_2H_5)_4HClO_4$, a caulking part 15 is formed and a sealing is made. 16 is a separator made of polypropylene. In case no collector auxiliary member is used, leads 17 and 18 made of aluminum are spot welded directly to the sprayed aluminum layer. In case an aluminum foil and an etched foil are used as collector auxiliary member, the leads are caulked thereto for connection. Table 11 shows the results with using and non-using of the collector auxiliary members and the various characteristics of the capacitors. The size of the sheet-type polarizable electrode body used is 30 mm length and 200 mm width for the positive side, whereas for the negative electrode side it is 30 mm length and 210 mm width. From Table 11 it can be seen that even in the wound-up type capacitor, a very high energy density and high reliability can be achieved. It is observed that when using an etched foil wherein the surface is rough and the contact collecting with the conductive layer is best as the auxiliary member an especially high reliability is achieved. Furthermore, such a capacitor wherein the negative electrode side is made larger than the positive electrode side like in the present example has a higher reliability. When the electrode area becomes large as in the present example, discharging of 100 mA or more becomes easy.

TABLE 11

| Sample No. | Kinds of collector auxiliary member | Impedance (mΩ) [at 1 kHz] | Capacitance (F) | Capacitance change rate in reliability test (%) |
|---|---|---|---|---|
| 1 | 30 μm etched aluminum foil | 236 | 13.16 | −2.0 |
| 2 | 30 μm aluminum foil | 321 | 13.10 | −2.8 |
| 3 | None | 530 | 13.06 | −4.3 |
| 4*) | None (activated carbon fiber cloth) | 930 | 10.01 | −5.0 |

*) comparison

As comparison example, an aluminum conductor is formed on a cloth made from activated carbon fiber (see Sample No. 4) and a similar wound-up type capacitor is made and its characteristics are also shown in Table 11. The capacitor of the present example has a greater capacitance and higher reliability. The capacitance change rate is measured after 1000 hrs. of charging 2 V to the capacitor at 70°C and is compared with the initial capacitance.

[Example 11]

As polarizable electrode body for the positive electrode side an electrode having a similar composition as that of Example 9 and having small holes is used, and as negative electrode side nickel is formed into a lattice and wood metal containing lithium with a weight ratio of Sn/Cd of 85/15 is used, to produce a polarized capacitor. As electrolytic solution, propylene carbonate solution containing 1 mol $LiClO_4$ is used. The polarizable electrode body has a diameter of 14 mm and a lithium doping amount of 10 mAh is used. Table 12 shows various characteristics of a capacitor of present example. Though capacitors having a non-polarizable electrode body for the negative electrode side have the shortcoming of to be weak against overdischarging, their breakdown voltage (voltage for use) is as high as 3.0 V, and their energy density is also about 2 times larger in comparison with those using a polarizable electrode both for positive and negative electrodes. Furthermore, such an assembly works as capacitor even when lithium metal is used as non-polarizable electrode body, although lithium dendolite is produced as charging and discharging are repeated and lithium is dropped off thereby and the capacitor characteristic is very much damaged. Further, even if an alloy of lithium-containing aluminum is used as the non-polarizable electrode body, in comparison with the use of the lithium only, a capacitor having good reliability was obtained.

TABLE 12

| Capacitance (F) | Impedance (Ω) [at 1 kHz] | Reliability test of 3 V charging during 1000 hrs. capacity change rate (%) |
|---|---|---|
| 0.23 | 5.2 | −10.8 |

[Example 12]

Using a sheet-type polarizable electrode body having a composition and weight ratio of 80:20 as in Sample No. 6 of Table 1, the density being 0.5 g/cm³ and the thickness being 300 μm, the capacitor shown in Figure 8a and b is made. Figure 8b shows a section cut by line X—X' of Figure 8a. 19 is a sheet-type polarizable electrode body of the above-mentioned constitution, 20 is a conductive aluminum layer of 100 μm thickness formed on the surface of the sheet-type polarizable electrode body. 22 is a collecting auxiliary member consisting of stainless steel (SUS444) of 30 μm thickness, 21 is a polypropylene separator of 50 μm thickness and 23 is a transparent coating layer of polypropylene of 200 μm thickness laminated with a sheet-type thermo-melting adhesive of the denaturated polypropylene type. As electrolytic solution, 1 mol propylene carbonate solution containing 1 mol $(C_2H_5)_4NClO_4$ is used. The capacitor of this example has a good collecting ability and sufficient strength of the polarizable electrode body, and even a capacitor with such a large size as 100×200 mm² can be assembled with sufficient workability. Furthermore the thermally fusing and adhering film sheet used as an adhesive in this example ensures a strong bonding with metal and other plastics, and the resistivity against organic solution is good. Table 13 shows characteristics of the capacitor of the present example. The capacity decrease rate after 1000 times charge-discharge is small and the reliability is high.

20

TABLE 13

| Impedance (mΩ) [at 1 kHz] | . Capacitance (F) | Capacitance change after 1000 times charges and discharges (%) |
|---|---|---|
| 43 | 49.3 | −8.3 |

The polarizable electrode body of the present invention may be used not only in electric double-layer capacitors but also for other purposes like as counter electrodes to oppose display electrodes of an electro-chromic display (ECD).

**Claims**

1. A polarizable electrode body comprising a paper sheet of a mixture of at least activated carbon fiber having a fiber length in the range of from 1 to 5 mm and a fibrous binding medium, said paper sheet having a layer of an electrically conductive substance provided on a surface thereof.

2. A polarizable electrode body in accordance with claim 1, wherein said sheet further contains another electrically conductive substance.

3. A polarizable electrode body in accordance with claim 2, wherein said other electrically conductive substance is at least one of the group comprising carbon fiber, graphite fiber, metal fiber, metal-coated carbon fiber, metal-coated resin fiber, carbon powder and graphite powder.

4. A polarizable electrode body in accordance with claim 1, wherein the density of said sheet is at least 0.1 g/cm³.

5. A polarizable electrode body in accordance with claim 1, wherein said binding medium constitutes no more than 60 wt% of said sheet.

6. A polarizable electrode body in accordance with claim 1, wherein said sheet has a plurality of through-holes provided therethrough.

7. A polarizable electrode body in accordance with claim 1, wherein said activated carbon fiber is selected from the group consisting of phenol-type, polyacrylonitrile-type, pitch-type and rayon-type activated carbon fiber.

8. A polarizable electrode body in accordance with claim 7, wherein said activated carbon fiber is a phenol-type novolak resin fiber of specific surface area of 1000 m²/g or more, which is carbonized and activated.

9. A polarizable electrode body in accordance with claim 7, wherein said activated carbon fiber is a polyacrylonitrile type activated carbon fiber of a specific surface area of at least 500 m²/g.

10. A polarizable electrode body in accordance with claim 1, wherein said activated carbon fiber is a tow-type fiber which is carbonized and activated.

11. The polarizable electrode body of claim 1, wherein said fibrous binding medium is made of natural fibers.

12. A polarizable electrode body in accordance with claims 2 to 11, wherein

(a) said activated carbon fibers have a diameter of about 10 μm, a specific surface area of 500—3000 m²/g, a pore diameter distribution of 20—40 Å, and a pore volume of 0.2—1.5 cm³/g;

(b) said binding medium is selected from the group consisting of fibrous Manila hemp, fibrous kraft pulp, polypropylene fiber, polyethylene fiber and acrylic fiber, consisting essentially of fibers ranging in length from 2 to 5 mm;

(c) said other conductivity-improving agent is selected from the group consisting of carbon fiber, stainless steel fiber 1—20 μm in diameter, nickel metal fiber 1—20 μm in diameter, said metal fibers forming chips 1—10 mm in length, non-electrolytically metal-plated carbon fiber, graphite powder, carbon black and metal-plated powdered resin;

the weight ratio of activated carbon fiber to binding medium in said electrode body being in the range of 30:70 to 80:20 and said conductive layer formed on a surface thereof being made of a metal selected from the group consisting of aluminum and nickel.

13. A method for making a polarizable electrode body comprising the steps of obtaining activated carbon fiber by carbonizing and activating fiber; chopping said activated carbon fiber to 1—5 mm to make chopped-type fiber; mixing said chopped-type activated carbon fiber and a fibrous binding medium with a liquid to form a slurry thereof; subsequently making paper sheet therewith; and providing a layer of an electrically conductive substance on a surface thereof.

14. A method for making a polarizable electrode body in accordance with claim 13, wherein tow-type fiber is used to make said activated carbon fiber.

15. A method for making a polarizable electrode body in accordance with claim 13, wherein the density of said paper sheet is increased by mechanically applying pressure to opposite faces thereof.

16. A method for making a polarizable electrode body in accordance with claim 13, wherein in said

21

sheet small holes of 0.5—3 mm in diameter are made, and said conductive layer is formed on one face of said sheet and on inside walls of said holes.

17. A method for making a polarizable electrode body in accordance with claim 14, wherein carbon fiber made by carbonizing tow-type fiber is cut into 1—5 mm length and this cut fiber, said activated tow-type fiber, said fibrous medium and said liquid are mixed and made into said paper sheet.

18. The method of claim 13, wherein said fibrous binding medium is made of natural fibers.

19. An electric double-layer capacitor, comprising a polarizable electrode body comprising a paper sheet of a mixture of at least activated carbon fiber having a fiber length of from 1—5 mm and a fibrous medium, said paper sheet having a layer of an electrically conductive substance provided on a surface thereof, a counter electrode, a separator disposed between said polarizable electrode and said counter electrode, said electrodes and separator being immersed in an electrolytic solution.

20. An electric double-layer capacitor in accordance with claim 19, wherein said counter electrode also comprises a paper sheet of a mixture of at least activated carbon fiber having a fiber length of from 1—5 mm and a fibrous binding medium, said paper sheet having an electrically conductive layer adhering to a surface thereof.

21. An electric double-layer capacitor of claim 19, wherein said fibrous binding medium is made of natural fibers.

22. An electric double-layer capacitor in accordance with claim 19, wherein said binding medium comprises at least one of a natural pulp or synthetic pulp.

23. An electric double-layer capacitor in accordance with claim 19, wherein another conductive substance is mixed into said paper sheet.

24. An electric double-layer capacitor in accordance with claim 23, wherein at least one of carbon fiber, graphite fiber, metal fiber, metal-coated carbon fiber, metal-coated resin fiber, carbon powder and graphite powder is mixed into said paper sheet as said other conductive substance.

25. An electric double-layer capacitor in accordance with claim 19, wherein said paper sheet has a density of not less than 0.1 $g/cm^3$.

26. An electric double-layer capacitor in accordance with claim 19, wherein said paper sheet contains not more than 60 wt% of said binding medium.

27. An electric double-layer capacitor in accordance with claim 19, wherein said paper sheet has a plurality of through-holes provided therethrough and has said conductive layer provided on one face of said paper sheet and on inside walls of said holes.

28. An electric double-layer capacitor in accordance with claim 19, wherein said activated carbon fibers in said paper sheet are selected from the group consisting of phenol-type, polyacrylonitrile-type, pitch-type and rayon-type activated carbon fibers.

29. An electric double-layer capacitor in accordance with claim 19, wherein said paper sheet contains activated carbon fiber obtained by carbonizing and activating phenol-type novolak resin having a specific surface area of not less than 1000 $m^2/g$.

30. An electric double-layer capacitor in accordance with claim 19, wherein said paper sheet contains activated carbon fiber of polyacrylonitrile-type having a specific surface area of not less than 500 $m^2/g$.

31. An electric double-layer capacitor in accordance with claim 19, wherein said counter-electrode is a non-polarizable electrode body selected from the group consisting of lithium-containing Wood's metal and aluminum-lithium alloy.

32. An electric double-layer capacitor in accordance with claim 19, wherein said conductive layer consists of sprayed metal formed by one of plasma spraying and arc spraying.

33. An electric double-layer capacitor in accordance with claim 22, wherein said natural pulp is at least one kind of Manila hemp and kraft pulp.

34. An electric double-layer capacitor in accordance with claim 22, wherein said synthetic pulp is at least one kind of polyethylene, polypropylene and acrylic synthetic pulp.

35. An electric double-layer capacitor in accordance with claim 24, wherein said carbon fiber and said graphite fiber consist of at least one of polyacrylonitrile-type, pitch-type, phenol-type and rayon-type carbon and graphite fibers respectively.

36. An electric double-layer capacitor in accordance with claim 22, wherein said conductive layer is formed on one face of said paper sheet and on inside walls of small holes through said paper sheet, said paper sheet being constituted by not less than 40 wt% of activated carbon fiber and not more than 60 wt% of binding medium, said small holes having a diameter of from 0.5—3 mm with 1—3 mm pitch.

37. An electric double-layer capacitor in accordance with claim 36, wherein said activated carbon fiber constitutes 80 wt% of said paper sheet.

38. An electric double-layer capacitor in accordance with claim 36, wherein said small holes are of 1.5 mm diameter with 1.5 mm pitch.

**Patentansprüche**

1. Ein polarisierbarer Elektrodenkörper, umfassend einen Papierbogen aus einer Mischung aus mindestens aktivierter Kohlenstoffaser mit einer Faserlänge im Bereich von 1 bis 5 mm und einem

# EP 0 187 163 B1

faserförmigen Bindemittelmedium, wobei besagter Papierbogen auf einer Oberfläche eine Schicht einer elektrisch leitenden Substanz aufweist.

2. Ein polarisierbarer Elektrodenkörper gemäß Anspruch 1, in welchem besagter Papierbogen außerdem eine andere elektrisch leitende Substanz enthält.

3. Ein polarisierbarer Elektrodenkörper gemäß Anspruch 2, in welchem besagte andere elektrisch leitende Substanz mindestens eine Substanz aus der Gruppe ist, welche Kohlenstofffaser, Graphitfaser, Metallfaser, mit Metall beschichtete Kohlenstoffaser, mit Metall beschichtete Harzfaser, Kohlenstoffpulver und Graphitpulver umfaßt.

4. Ein polarisierbarer Elektrodenkörper gemäß Anspruch 1, in welchem die Dichte des besagten Bogens mindestens 0,1 g/cm³ beträgt.

5. Ein polarisierbarer Elektrodenkörper gemäß Anspruch 1, in welchem besagtes Bindemittelmedium nicht mehr als 60 Gew.% des besagten Bogens ausmacht.

6. Ein polarisierbarer Elektrodenkörper gemäß Anspruch 1, in welchem besagter Bogen eine Vielzahl von Durchgangslöchern, die durch ihn hindurchgehen, aufweist.

7. Ein polarisierbarer Elektrodenkörper gemäß Anspruch 1, in welchem besagte aktivierte Kohlenstoffaser ausgewählt ist aus der Gruppe, welche aus aktivierter Kohlenstoffaser des Phenoltyps, des Polyacrylnitriltyps, des Pechtyps und des Rayon-Typs besteht.

8. Ein polarisierbarer Elektrodenkörper gemäß Anspruch 7, in welchem besagte aktivierte Kohlenstoffaser eine Faser aus einem Phenolharz des Novolak-Typs mit einer spezifischen Oberfläche von 1000 m²/g oder mehr ist, welche carbonisiert und aktiviert worden ist.

9. Ein polarisierbarer Elektrodenkörper gemäß Anspruch 7, in welchem besagte aktivierte Kohlenstoffaser eine aktivierte Kohlenstoffaser eines Polyacrylnitriltyps mit einer spezifischen Oberfläche von mindestens 500 m²/g ist.

10. Ein polarisierbarer Elektrodenkörper gemäß Anspruch 1, in welchem besagte aktivierte Kohlenstoffaser eine kabelartige Faser ist, welche carbonisiert und aktiviert worden ist.

11. Der polarisierbare Elektrodenkörper gemäß Anspruch 1, in welchem besagtes faserförmiges Bindemittelmedium aus Naturfasern besteht.

12. Ein polarisierbarer Elektrodenkörper gemäß den Ansprüchen 2 bis 11, in welchem

(a) besagte aktivierte Kohlenstoffasern einen Durchmesser von etwa 10 µm, eine spezifische Oberfläche von 500 bis 3000 m²/g, eine Verteilung des Porendurchmessers im Bereich von 20 bis 40 Å und ein Porenvolumen von 0,2 bis 1,5 cm³/g aufweisen;

(b) besagtes Bindemittelmedium aus der Gruppe ausgewählt ist, welche aus faserförmigem Manila-Hanf, faserförmigem Kraft-Zellstoff, Polypropylenfaser, Polyäthylenfaser und Acrylfaser besteht, und im wesentlichen aus Fasern mit einer Länge im Bereich von 2 bis 5 mm besteht;

(c) besagtes die Leitfähigkeit verbesserndes Mittel ausgewählt ist aus der Gruppe, welche aus Kohlenstoffaser, Faser aus Stahlwolle mit einem Durchmesser von 1 bis 20 µm, Faser aus Nickelmetall mit einem Durchmesser von 1 bis 20 µm, wobei besagte Metallfasern Chips von 1 bis 10 mm Länge bilden, nicht auf elektrolytische Weise metallplattierter Kohlenstoffaser, Graphitpulver, Ruß und metallplattiertem Harzpulver besteht;

wobei das Gewichtsverhältnis von aktivierter Kohlenstoffaser zu Bindemittelmedium in besagtem Elektrodenkörper im Bereich von 30:70 bis 80:20 liegt und die auf einer Oberfläche desselben gebildete besagte leitende Schicht aus einem Metall besteht, welches aus der Gruppe ausgewählt ist, die aus Aluminium und Nickel besteht.

13. Eine Method zur Herstellung eines polarisierbaren Elektrodenkörpers, umfassend die Stufen des Erhaltens von aktivierter Kohlenstoffaser durch Carbonisieren und Aktivieren einer Faser, des Schneidens besagter aktivierter Kohlenstoffaser auf eine Länge von 1 bis 5 mm zum Erzeugen von Fasern des Stapelfasertyps (chopped-type fiber), des Vermischens der aktivierten Kohlenstoffaser des Stapelfasertyps und eines faserförmigen Bindemittelmediums mit einer Flüssigkeit unter Bildung einer Aufschlämmung, des anschließenden Herstellens eines Papierbogens unter Verwendung derselben und des Aufbringens einer elektrisch leitenden Substanz auf eine Oberfläche des letzteren.

14. Eine Methode zur Herstellung eines polarisierbaren Elektrodenkörpers gemäß Anspruch 13, in welcher kabelartige Faser zur Herstellung besagter aktivierter Kohlenstoffaser verwendet wird.

15. Eine Methode zur Herstellung eines polarisierbaren Elektrodenkörpers gemäß Anspruch 13, in welchem die Dichte des besagten Papierbogens durch mechanische Einwirkung von Druck auf gegenüberliegende Seiten desselben erhöht wird.

16. Eine Methode zur Herstellung eines polarisierbaren Elektrodenkörpers gemäß Anspruch 13, wobei in besagtem Bogen kleine Löcher von 0,5—3 mm Durchmesser erzeugt werden und besagte leitende Schicht auf einer Oberfläche des besagten Bogens und auf den Innenwandungen der besagten Löcher gebildet wird.

17. Eine Methode zur Herstellung eines polarisierbaren Elektrodenkörpers gemäß Anspruch 14, wobei die Kohlenstoffaser, welche durch Carbonisieren einer kabelartigen Faser erhalten worden ist, in Stücke von 1 bis 5 mm Länge zerschnitten und diese zerschnittene Faser, besagte aktivierte kabelartige Faser, besagtes faserförmiges Medium und besagte Flüssigkeit miteinander vermischt und zu besagtem Papierbogen verarbeitet werden.

23

18. Die Methode nach Anspruch 13, in welchem besagtes faserförmiges Bindemittelmedium aus Naturfasern besteht.

19. Ein elektrischer Doppelschicht-Kondensator, umfassend einen polarisierbaren Elektrodenkörper, welcher einen Papierbogen aus einer Mischung aus mindestens aktivierter Kohlenstoffaser mit einer Faserlänge im Bereich von 1 bis 5 mm und einem faserförmigen Bindemittelmedium aufweist, wobei besagter Papierbogen auf einer Oberfläche mit einer Schicht aus einer elektrisch leitenden Substanz versehen ist, umfassend ferner eine Gegenelektrode, einen zwischen besagter polarisierbarer Elektrode und besagter Gegenelektrode angeordneten Separator, wobei besagte Elektrode und besagter Separator in einer Elektrolytlösung eingetaucht sind.

20. Ein elektrischer Doppelschicht-Kondensator gemäß Anspruch 19, in welchem auch besagte Gegenelektrode einen Papierbogen aus einer Mischung aus mindestens aktivierter Kohlenstoffaser mit einer Faserkänge von 1—5 mm und ein faserförmiges Bindemittelmedium umfaßt, wobei besagter Papierbogen, angehaftet an einer Oberfläche, eine elektrisch leitende Schicht aufweist.

21. Ein elektrischer Doppelschicht-Kondensator gemäß Anspruch 19, in welchem besagtes faserförmiges Bindemittelmedium aus Naturfasern besteht.

22. Ein elektrischer Doppelschicht-Kondensator gemäß Anspruch 19, in welchem besagtes Bindemittelmedium mindestens natürliche Fasern oder synthetische Fasern umfaßt.

23. Ein elektrischer Doppelschicht-Kondensator gemäß Anspruch 19, in welchem eine andere leitende Substanz in besagten Papierbogen eingemischt ist.

24. Ein elektrischer Doppelschicht-Kondensator gemäß Anspruch 23, in welchem als besagte andere leitende Substanz mindestens ein Vertreter aus der nachstehenden Gruppe ausgewählt wird, welche Kohlenstoffaser, Graphitfaser, Metallfaser, mit Metall beschichtete Kohlenstoffaser, mit Metall beschichtete Harzfaser, Kohlenstoffpulver und Graphitpulver umfaßt, und in besagtem Papierbogen eingemischt ist.

25. Ein elektrischer Doppelschicht-Kondensator gemäß Anspruch 19, in welchem besagter Papierbogen eine Dichte von nicht weniger als 0,1 g/cm$^3$ aufweist.

26. Ein elektrischer Doppelschicht-Kondensator gemäß Anspruch 19, in welchem besagter Papierbogen nicht mehr als 60 Gew.% des besagten Bindemittelmediums enthält.

27. Ein elektrischer Doppelschicht-Kondensator gemäß Anspruch 19, in welchem besagter Papierbogen eine Mehrzahl von hindurchgehenden Löchern aufweist und besagte leitende Schicht auf einer Fläche des besagten Papierbogens und auf den Innenwandungen der besagten Löcher aufgebracht ist.

28. Ein elektrischer Doppelschicht-Kondensator gemäß Anspruch 19, in welchem besagte aktivierte Kohlenstoffaser in besagtem Papierbogen ausgewählt ist aus der Gruppe, welche aktivierte Kohlenstoffasern des Phenoltyps, des Polyacrylnitriltyps, des Pechtyps und des Rayontyps umfaßt.

29. Ein elektrischer Doppelschicht-Kondensator gemäß Anspruch 19, in welchem besagter Papierbogen aktivierte Kohlenstoffaser enthält, welche durch Carbonisieren und Aktivieren einer Faser aus Phenolharz des Novolak-Typs mit einer spezifischen Oberfläche von nicht weniger als 1000 m$^2$/g erhalten worden ist.

30. Ein elektrischer Doppelschicht-Kondensator gemäß Anspruch 19, in welchem besagter Papierbogen aktivierte Kohlenstoffaser des Polyacrylnitriltyps mit einer spezifischen Oberfläche von nicht weniger als 500 m$^2$/g enthält.

31. Ein elektrischer Doppelschicht-Kondensator gemäß Anspruch 19, in welchem besagte Gegenelektrode ein nicht polarisierbarer Elektrodenkörper ist, ausgewählt aus der Gruppe, welche aus lithiumhaltigem Wood-Metall und einer Aluminium-Lithium-Legierung besteht.

32. Ein elektrischer Doppelschicht-Kondensator gemäß Anspruch 19, in welchem besagte leitende Schicht aus aufgesprühtem Metall besteht, welche mittels der Technik des Plasmasprühens oder des Lichtbogensprühens gebildet worden ist.

33. Ein elektrischer Doppelschicht-Kondensator gemäß Anspruch 22, in welchem besagte Naturfaser mindestens aus Manila-Hanf oder Kraft-Zellstoff besteht.

34. Ein elektrischer Doppelschicht-Kondensator gemäß Anspruch 22, in welchem besagte synthetische Faser mindestens aus Faserpulpe des Polyäthylentyps, des Polypropylentyps und des Acryltyps besteht.

35. Ein elektrischer Doppelschicht-Kondensator gemäß Anspruch 24, in welchem besagte Kohlenstoffaser und besagte Graphitfaser aus mindestens einer Faser des Polyacrylnitriltyps, des Pechtyps, des Phenoltyps und des Rayon-Typs bzw. aus Graphitfasern besteht.

36. Ein elektrischer Doppelschicht-Kondensator gemäß Anspruch 22, bei welchem besagte leitende Schicht auf einer Oberfläche besagten Papierbogens und auf den Innenwandungen der durch besagten Papierbogen hindurchgehenden kleinen Löcher gebildet ist, wobei besagter Papierbogen aus nicht weniger als 40 Gew.% aktivierter Kohlenstoffaser und nicht mehr als 60 Gew.% Bindemittelmedium zusammengesetzt ist und die besagten kleinen Löcher einen Durchmesser von 0,5 bis 3 mm mit einer Neigung von 1 bis 3 mm haben.

37. Ein elektrischer Doppelschicht-Kondensator gemäß Anspruch 36, in welchem besagte aktivierte Kohlenstoffaser 80 Gew.% des besagten Papierbogens ausmacht.

38. Ein elektrischer Doppelschicht- Kondensator gemäß Anspruch 36, in welchem besagte kleine Löcher einen Durchmesser von 1,5 mm mit einer Neigung von 1,5 mm aufweisen.

# EP 0 187 163 B1

**Revendications**

1. Corps d'électrode polarisable comprenant une feuille en papier d'un mélange d'au moins une fibre de carbone activée ayant une longueur de fibre dans la plage comprise entre 1 et 5 mm et un milieu de liaison fibreux, la feuille en papier ayant une couche de substance conductrice de l'électricité appliquée à l'une de ses surfaces.

2. Corps d'électrode polarisable selon la revendication 1, dans lequel la feuille comporte en outre une autre substance conductrice de l'électricité.

3. Corps d'électrode polarisable selon la revendication 2, dans lequel l'autre substance conductrice de l'électricité est au moins une substance du groupe comprenant la fibre de carbone, la fibre de graphite, la fibre métallique, la fibre de carbone revêtue de métal, la fibre de résine revêtue de métal, la poudre de carbone et la poudre de graphite.

4. Corps d'électrode polarisable selon la revendication 1, dans lequel la densité de la feuille est au moins 0,1 g/cm³.

5. Corps d'électrode polarisable selon la revendication 1, dans lequel le milieu de liaison ne constitue pas plus de 60% en poids de la feuille.

6. Corps d'électrode polarisable selon la revendication 1, dans lequel la feuille présente une multitude, de trous traversants qui sont ménagés à travers elle.

7. Corps d'électrode polarisable selon la revendication 1, dans lequel la fibre de carbone activée est choisie dans le groupe constitué des fibres de carbone activées du type phénol, du type polyacrylonitrile, du type brai et du type rayonne.

8. Corps d'électrode polarisable selon la revendication 7, dans lequel la fibre de carbone activée est une fibre de résine novolaque du type phénol ayant une surface spécifique de 1000 m²/g ou plus, qui est carbonisée et activée.

9. Corps d'électrode polarisable selon la revendication 7, dans lequel la fibre de carbone activée est une fibre de carbone activée du type polyacrylonitrile ayant une surface spécifique d'au moins 500 m²/g.

10. Corps d'électrode polarisable selon la revendication 1, dans lequel la fibre de carbone activée est une fibre du type étoupe qui est carbonisée et activée.

11. Corps d'électrode polarisable selon la revendication 1, dans lequel le milieu fibreux de liaison est constitué de fibres naturelles.

12. Corps d'électrode polarisable selon les revendications 2 à 11 dans lequel:

(a) les fibres de carbone activées ont un diamètre d'environ 10 µm, une surface spécifique de 500—3000 m²/g, une distribution du diamètre des pores de 20—40A, et un volume des pores de 0,2—1,5 cm³/g;

(b) le milieu de liaison est choisi dans le groupe constitué du chanvre fibreux de Manille, de la pulpe kraft fibreuse, de la fibre de polypropylène, de la fibre de polyéthylène et de la fibre acrylique, constitué essentiellement de fibres d'une longueur allant de 2 à 5 mm;

(c) l'autre agent d'amélioration de la conductivité est choisi dans le groupe constitué de la fibre de carbone, de la fibre d'acier inoxydable de 1 à 20 µm de diamètre, de la fibre métallique de nickel d'un diamètre de 1 à 20 µm, des fibres métalliques formant des copeaux de 1 à 10 mm de long, de la fibre de carbone métallisée non électrolytiquement, de la poudre de graphite, d'une résine en poudre de noir de carbone et revêtue de métal;

le rapport en poids de la fibre de carbone activée et du milieu de liaison dans le corps de l'électrode étant dans la gamme comprise entre 30:70 et 80:20 et la couche conductrice formée sur l'une de ses surfaces étant constituée d'un métal choisi dans le groupe comprenant l'aluminium et le nickel.

13. Procédé de fabrication d'un corps d'électrode polarisable comprenant les étapes consistant à obtenir une fibre de carbone activée par carbonisation et activation de la fibre; à hacher la fibre de carbone activée à 1—5 mm pour obtenir une fibre du type haché; à mélanger la fibre de carbone activée du type hâché et un milieu fibreux de liaison avec un liquide pour former une bouillie; à faire ensuite une feuille de papier avec celle-ci; et à fournir une couche d'une substance conductrice de l'électricité sur l'une de ses surfaces.

14. Procédé de fabrication d'un corps d'électrode polarisable selon la revendication 13, dans lequel une fibre du type étoupe est utilisée pour réaliser la fibre de carbone activée.

15. Procédé de fabrication d'un corps d'électrode polarisable selon la revendication 13, dans lequel la densité de la feuille de papier est augmentée par application mécanique de pression à ses faces opposées.

16. Procédé pour fabriquer un corps d'électrode polarisable selon la revendication 13, dans lequel on ménage des petits trous de 0,5 à 3 mm de diamètre dans la feuille, et la couche conductrice est formée sur une face de la feuille et sur les parois intérieures des trous.

17. Procédé pour fabriquer un corps d'électrode polarisable selon la revendication 14, dans lequel la fibre de carbone obtenue par carbonisation de la fibre du type étoupe est coupée en tronçons de 1 à 5 mm et cette fibre coupée, la fibre activée du type étoupe, et le milieu fibreux et le liquide sont mélangés et transformés en feuille de papier.

18. Procédé selon la revendication 13, dans lequel le milieu fibreux de liaison est constitué de fibres naturelles.

19. Condensateur électrique à couche double, comprenant un corps d'électrode polarisable

25

comportant une feuille de papier d'un mélange d'au moins une fibre de carbone activée ayant une longueur de fibre de 1 à 5 mm et d'un milieu fibreux, la feuille de papier ayant une couche d'une substance conductrice de l'électricité appliquée à l'une de ses surfaces, une contre-électrode, un séparateur placé entre l'électrode polarisable et la contre-électrode, les électrodes et le séparateur étant plongés dans une solution électrolytique.

20. Condensateur électrique à couche double selon la revendication 19, dans lequel la contre-électrode comprend aussi une feuille de papier d'un mélange d'au moins une fibre de carbone activée ayant une longueur de fibre de 1 à 5 mm et d'un milieu fibreux de liaison, la feuille de papier ayant une couche conductrice de l'électricité adhérant à l'une de ses surfaces.

21. Condensateur électrique à couche double selon la revendication 19 dans lequel le milieu fibreux de liaison est constitué de fibres naturelles.

22. Condensateur électrique à couche double selon la revendication 19, dans lequel le milieu de liaison comprend au moins une pulpe naturelle ou une pulpe synthétique.

23. Condensateur électrique à couche double selon la revendication 19, dans lequel une autre substance conductrice est mélangée dans la feuille de papier.

24. Condensateur électrique à couche double selon la revendication 23, dans lequel au moins l'une des fibres suivantes: fibre de carbone, fibre de graphite, fibre de métal, fibre de carbone revêtue de métal, fibre de résine revêtue de métal, poudre de carbone et poudre de graphite est mélangée pour former une feuille de papier comme constituant l'autre substance conductrice.

25. Condensateur électrique à couche double selon la revendication 19, dans lequel la feuille de papier a une densité non inférieure à 0,1 $g/cm^3$.

26. Condensateur électrique à couche double selon la revendication 19, dans lequel la feuille de papier ne contient pas plus de 60% en poids du milieu de liaison.

27. Condensateur électrique à couche double selon la revendication 19, dans lequel la feuille de papier présente une multitude de trous traversants et comporte une couche conductrice appliquée à une face de la feuille de papier et aux parois intérieures des trous.

28. Condensateur électrique à couche double selon la revendication 19, dans lequel les fibres de carbone activées dans la feuille de papier sont choisies parmi le groupe constitué des fibres de carbone activées du type phénol, du type polyacrylonitrile, du type brai et du type rayonne.

29. Condensateur électrique à couche double selon la revendication 19, dans lequel la feuille de papier contient de la fibre de carbone activée obtenue par carbonisation et activation d'une résine novolaque du type phénol ayant une surface spécifique non inférieure à 1000 $m^2/g$.

30. Condensateur électrique à couche double selon la revendication 19, dans lequel la feuille de papier contient une fibre de carbone activée du type polyacrylonitrile ayant une surface spécifique non inférieure à 500 $m^2/g$.

31. Condensateur électrique à couche double selon la revendication 19, dans lequel la contre-électrode est un corps d'électrode non polarisable choisi dans le groupe constitué du métal de Wood contenant du lithium et d'un alliage d'aluminium-lithium.

32. Condensateur électrique à couche double selon la revendication 19, dans lequel la couche conductrice est constituée de métal pulvérisé, formée par pulvérisation en plasma ou pulvérisation par arc.

33. Condensateur électrique à couche double selon la revendication 22, dans lequel la pulpe naturelle est au moins une sorte de chanvre de Manille et de pulpe de kraft.

34. Condensateur électrique à couche double selon la revendication 22, dans lequel la pulpe synthétique est au moins une sorte de pulpe de polyéthylène, de polypropylène et d'acrylique.

35. Condensateur électrique à couche double selon la revendication 24, dans lequel la fibre de carbone et la fibre de graphite sont constituées d'au moins l'une des fibres suivantes: du type polyacrylonitrile, du type brai, du type phénol et carbone du type rayonne et graphite, respectivement.

36. Condensateur électrique à couche double selon la revendication 22, dans lequel la couche conductrice est formée sur une face de la feuille de papier et sur les parois intérieures des petits tous ménagés dans la feuille de papier, la feuille de papier étant constituée de pas moins de 40% en poids de fibre de carbone activée et de pas plus de 60% en poids du milieu de liaison, les petits trous ayant un diamètre compris entre 0,5 et 3 mm avec un pas de 1 à 3 mm.

37. Condensateur électrique à couche double selon la revendication 36, dans lequel la fibre de carbone activée constitue 80% en poids de la feuille de papier.

38. Condensateur électrique à couche double selon la revendication 36, dans lequel les petits trous ont un diamètre de 1,5 mm avec un pas de 1,5 mm.

FIG.1

FIG.2

F I G.3

- a — Spinning
- Material fiber ⍺
- Tow type fiber β
- b — Carbonization and activation
- c — Cutting
- Chopped activated carbon fiber γ
- Binding medium δ
- Beating to debinding i
- Mixing in wet system d
- Paper making e
- f' — Emboss working, punching working
- Calender working f
- Drying g
- Conductivity layer forming h
- Sheet type polarizable electrode body formed with conductivity layer ε

FIG.4

Time (Sec)

FIG.5

FIG.6

Capacitance change rate (%)

Impedance change rate (%)

Capacitance change rate
Impedance change rate

Test time (Hrs)

FIG.7

FIG.8

(a)

(b)

LIST OF REFERENCE NUMERALS OF DRAWING

1 --- activated carbon fiber

2 --- metal conductive layer

3 --- polarizable electrode body

4 --- metal conductive body

5 --- metal case

6 --- metal seal plate

7 --- separator

8 --- gasket

9 --- small holes

10 --- sheet type polarizable electrode body

11 --- aluminum conductive layer

12 --- collector auxiliary foil

13 --- case

14 --- packing member

15 --- caulking part

16 --- separator

17 --- lead

18 --- lead

19 --- sheet type polarizable electrode body

20 --- aluminum conductive layer

21 --- separator

22 --- collector auxiliary member

23 --- transparent coating layer

24 --- electrode lead